# EUROPEAN PATENT APPLICATION

(11) **EP 2 584 612 A1**
(43) Date of publication of application: **24.04.2013**
(21) Application number: 11795505.4
(22) Date of filing: 19.05.2011
(51) Int. Cl.: H01L 31/042

(54) **JOINT STRUCTURE OF SOLAR CELL MODULE AND INSTALLATION METHOD FOR SOLAR CELL MODULE**

(30) Priority: 16.06.2010 JP 2010136725
(71) Applicant: Fuji Electric Co., Ltd., Kawasaki-shi Kanagawa 210-9530 (JP)
(72) Inventor: HITOMI, Miyako, Kawasaki-shi Kanagawa 210-9530 (JP); NAMIKI, Yoichi, Kawasaki-shi Kanagawa 210-9530 (JP); TANDA, Masayuki, Kawasaki-shi Kanagawa 210-9530 (JP); HIGASHIDATE, Makoto, Kawasaki-shi Kanagawa 210-9530 (JP)
(74) Representative: Appelt, Christian W.
(86) International application number: PCT/JP2011/061490
(87) International publication number: WO 2011/158597

(57) **Abstract**

In a solar cell module bonding structure in which a solar cell module (1) is bonded to a support member (3) via an adhesive material (2), by combined use of at least two adhesive materials (2a, 2b), which are disposed in mutually different bonding regions and having mutually different temperature characteristics of elasticity, an adhesive material (2) exhibits a peeling strength by which there is no peeling over a broad temperature range.

## Description

### TECHNICAL FIELD

This invention relates to a bonding structure for bonding a solar cell module to a roof, wall, or other support member, and more particularly, relates to a bonding structure of a solar cell module and a method of installing the same, which can make use of inexpensive adhesive materials for bonding the module.

### BACKGROUND ART

In order to install a solar cell module outdoors and obtain electric power, the module must be fastened to a building, stand, or other structure. That is, the solar cell module must be mounted on a metal plate, resin sheet, tile, wooden board, concrete, or other support member which is one portion of a structure.

In the case of a solar cell module using a glass plate, such as for example a silicon single-crystal type solar cell module, an installation method has been necessary which enables the frame, stand or similar to withstand the weight of the glass. However, in the case of a thin film type solar cell module using amorphous silicon or similar, and in particular a flexible type solar cell module sealed using polymer film, a large stand or frame is not necessary. Instead, installation which exploits the light weight of such module types is desired.

There are cases in which an adhesive material is used in mounting a conventional flexible solar cell module. For example, Patent Document 1 discloses that a solar cell module is bonded to a metal roof using double-sided tape, and that the double-sided tape is disposed such that water and humidity do not intrude. Patent Document 2 discloses, in relation to horizontally installed roofing, that when double-sided tape or adhesive having water resistance is used to fasten solar modules, tape with drip hole machining is used.

Patent Document 1: Japanese Patent Application Laid-open No. H6-85306
Patent Document 2: Japanese Patent Application Laid-open No. 2005-213926

In the case of a flexible solar cell module, the above-described adhesion as an installation which exploits the light weight of the module is well-known to be extremely advantageous in terms of ease of execution.

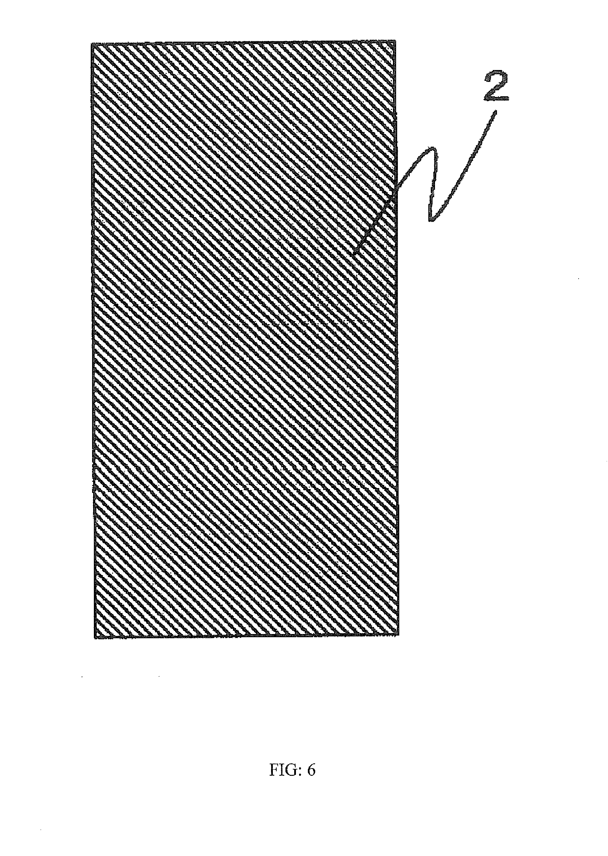

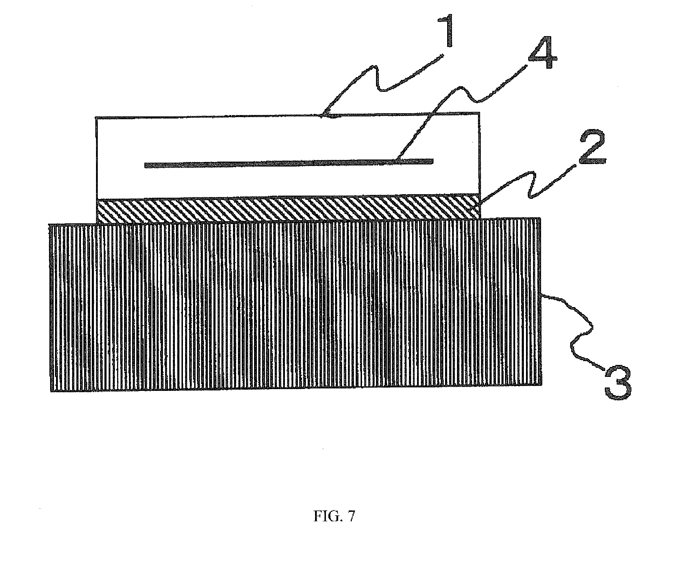

However, commercially marketed double-sided tape has not satisfied both requirements relating to adhesive properties with solar cell modules and support members, and material costs. In general, double-sided adhesive tape has adhesive layers on both faces of a core member, called a foam material, such as polyethylene foam, polyurethane foam, acrylic foam, and similar, and is cut into widths of approximately several tens of millimeters and wound with release paper intervening. Fig. 6 shows a schematic diagram of adhesive sheet disposed in the rear face of a conventional solar cell module; Fig. 7 shows a schematic diagram of the cross-section of a solar cell module structure, when a flexible solar cell module obtained by conventional technology is affixed to a support member.

A sheet-shape material with adhesive properties 2 must have appropriate elasticity in order to absorb differences in dimensional change originating in different thermal expansion rates of the solar cell module 1 and the support member 3, as well as strain and similar arising from deformation of the structure resulting when a flexible solar cell module 1 and support member 3 are combined, and in order to avoid damage at the adhesion interface.

In general, adhesive materials comprising polymers at low temperatures have reduced molecular movement and are harder, and become glasslike. In this case, the flexibility required of an adhesive material is lost, the normal function of providing adhesive properties through deformation disappears, and the phenomenon of instantaneous detachment tends to occur at the interface of the solar cell module 1 and the adhesive material, or at the interface of the support member 3 and the adhesive material. "Instantaneous detachment" refers to detachment at once over a large area upon the occasion of a shock or similar, due to a high storage elastic modulus, that is, the adhesive material becoming glasslike and hard, under the influence of temperature.

Further, at high temperatures viscosity increases, becoming paste-like, so that when the solar cell module 1 and support member 3 move, the adhesive material undergoes deformation but does not have the elasticity to return to its original shape, and so a type of failure called cohesive failure occurs within the adhesive material. Hence in order to impart a restoring force for deformation, it is important that rubber elasticity be exhibited over the range of temperatures at which the solar cell module 1 is used. The temperature range required of the structure obtained by adhesion of the solar cell module 1 and support member 3 is broad, ranging from -20°C to 85°C, and no single material has been found which satisfies long-term adhesion requirements over this range.

On the other hand, wet hardening type adhesives, of which silicone is representative, and reaction hardening type adhesives, of which epoxy resins are representative, have stable adhesion properties over a broad range of temperatures, but in many cases present problems with respect to price and ease of execution. In particular, two-liquid type adhesives often require adjustment of mixing ratios and other skilled tasks.

In Patent Document 1, one method of affixing double-sided tape is presented; but the installation area of double-sided tape is small relative to the area of the solar cells, and moreover double-sided tape is not mounted at corner portions of the solar cells, and thus it is possible that adequate adhesion strength may not be obtained, and moreover there is the concern that detachment from corner portions due to strong winds cannot be prevented.

Patent Document 2 also employs adhesion of double-sided tape, but the area of the double-sided tape is small compared with the area of the solar cells. Further, drip holes are realized by omitting tape that would normally be disposed in corner portions, and no consideration to corner portions has been paid.

### DISCLOSURE OF THE INVENTION

In relation to these problems, an object of this invention is to provide a solar cell module bonding structure and installation method which uses low-cost adhesive sheet, in which affixing to the solar cell module and support member is performed with the characteristics of the adhesive sheet exploited, and in which both sufficient adhesive properties over a broad temperature range and low costs are achieved.

In order to achieve this object, a structure of this invention, in which a flexible solar cell module is bonded to a metal plate, resin sheet, tile, wooden board, concrete, or other support member via an adhesive material, is characterized in that the adhesive material comprises at least two adhesive materials, disposed in mutually different bonding regions and having mutually different temperature characteristics of the elastic modulus.

It is preferable that the adhesive materials be pressure-sensitive type adhesive sheets, and it is further preferable that one of the adhesive materials exhibit a storage elastic modulus of 0.001 MPa to 1.0 MPa in the temperature range of -20°C to 85°C, which is required of a solar cell module structure. Further, in order to prevent detachment from the corner portions of the solar cell module, it is preferable that the adhesive sheet disposed in corner portions on the rear-face side exhibit a rubber elastic region at relatively lower temperatures than the adhesive sheet disposed in other portions.

By means of a bonding structure of a solar cell module of this invention, bonding of a flexible solar cell module to a support member in which detachment from corner portions over a broad temperature range is prevented, and moreover the occurrence of shifts in position of the solar cell module do not occur, can be achieved.

### BRIEF DESCRIPTION OF THE DRAWINGS

Fig. 1 is a schematic rear-face view of the solar cell module in a first example of the invention, showing the disposition of adhesive sheets;
Fig. 2 is a cross-sectional view along A-A' in Fig. 1;
Fig. 3 is a schematic cross-sectional view corresponding to Fig. 2, showing a structure of this invention in which a solar cell module is bonded to a support member;
Fig. 4 is a schematic rear-face view of the solar cell module in a second example of the invention, showing the disposition of adhesive sheets;
Fig. 5 is a schematic rear-face view of the solar cell module in a third example of the invention, showing the disposition of adhesive sheets;
Fig. 6 is a schematic rear-face view of a solar cell module of the prior art, showing the disposition of an adhesive sheet; and
Fig. 7 is a schematic cross-sectional view showing a structure of the prior art in which a solar cell module is bonded to a support member.

### BEST MODE FOR CARRYING OUT THE INVENTION

Below, preferred embodiments of the invention are explained.

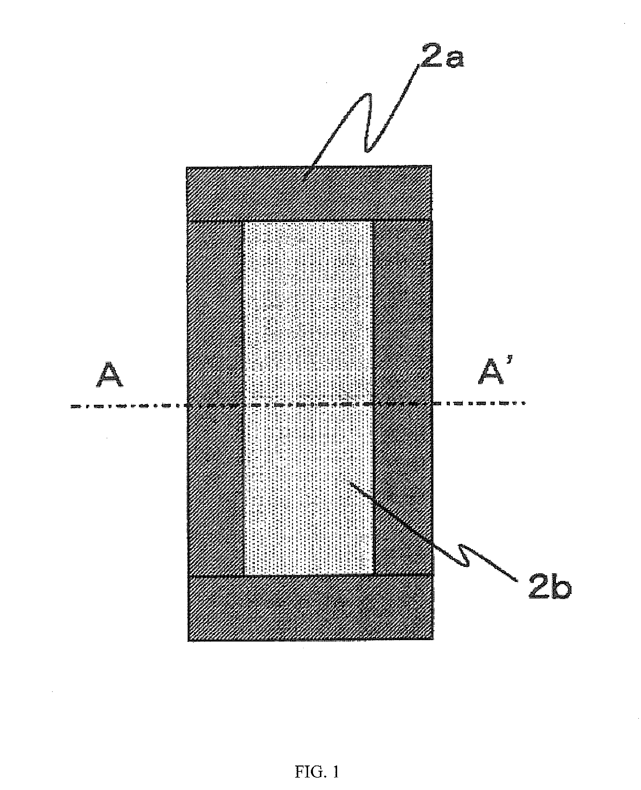

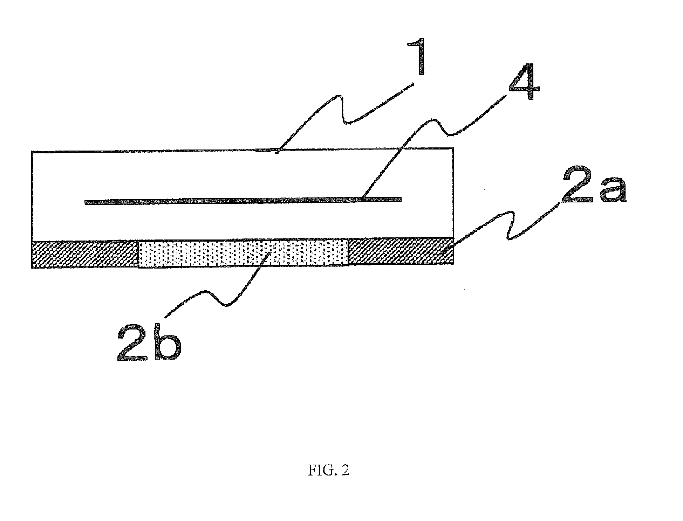

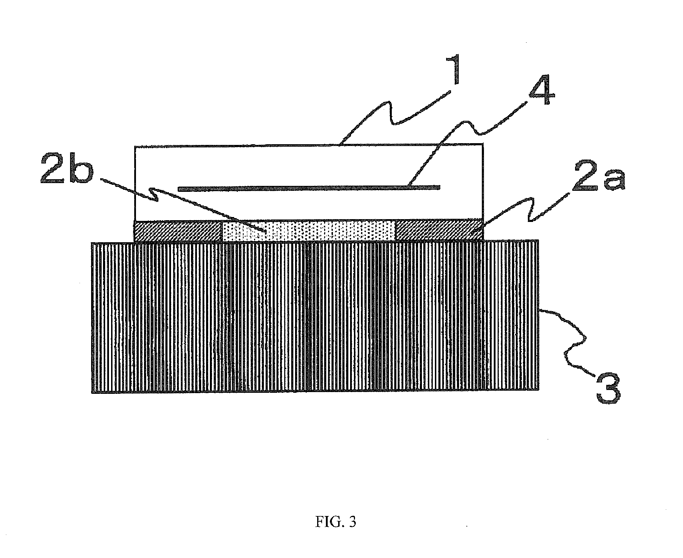

Fig. 1 to Fig. 3 a view of the disposition of adhesive sheets, a cross-sectional view, and a cross-sectional view affixed to a support member, of a flexible solar cell module obtained by implementing this invention. Here sheet-shape adhesive materials 2a and 2b having adhesive functions are disposed between the flexible solar cell module 1 and the support member 3, to constitute a solar cell module stacked structure. Within the solar cell module 1, solar cells 4 are enveloped by a thermal laminate.

The sheet-shape materials with adhesive functions 2a and 2b are disposed between the solar cell module 1 and support member 2 without gaps; the adhesive sheet for low temperatures 2a, disposed in corner portions of the solar cell module, exhibits a rubber elastic region in a relatively low temperature region compared with the adhesive sheet for high temperatures 2b. Here, in the temperature region from -20°C to 85°C which is the temperature range required of the solar cell module structure, at least one among the sheet-shape materials having adhesive functions 2a and 2b exhibits a storage elastic modulus of from 0.001 MPa to 1.0 MPa.

The adhesive material for low temperatures 2a is characterized by not readily becoming glasslike mainly in the low-temperature region, and by exhibiting rubber elasticity. Specifically, the storage elastic modulus at -30°C to 70°C, and desirably -20°C to 60°C, is from 0.001 MPa to 1.0 MPa, and more preferably 0.01 MPa to 1.0 MPa.

The adhesive material for high temperatures 2b is characterized by not readily becoming paste-like mainly in the high-temperature region, and by exhibiting rubber elasticity. Specifically, the storage elastic modulus at -10°C to 100°C, and desirably 0°C to 90°C, is from 0.001 MPa to 1.0 MPa, and more preferably 0.01 MPa to 1.0 MPa.

In Fig. 1, by disposing the adhesive sheet for low temperatures 2a on the periphery, instantaneous detachment due to the adhesive becoming glasslike at low corners from the outer periphery and corner portions of the solar cell module 1 can be prevented. Here "instantaneous detachment" refers to detachment at once over a large area upon the occasion of a shock or similar, due to a high storage elastic modulus of the adhesive material, that is, the adhesive material becoming glasslike and hard, under the influence of temperature.

At low temperatures, detachment from the periphery can be prevented by the adhesive material for low temperatures 2a, so that the adhesive sheet for high temperatures 2b can be disposed on the inside without problem.

On the other hand, at high temperatures the adhesive sheet for low temperatures 2a disposed on the periphery takes on viscosity, so that "instantaneous detachment" does not occur. And, the adhesive sheet for high temperatures 2b disposed on the inside can prevent shifts in position of the solar cell module due to cohesive failure of adhesive material, so that shifts in position of the solar cell module do not occur in the adhesive sheet for low temperatures 2a on the periphery, and the shape can be maintained.

The solar cell module 1 can use, as the material on the adhesive-face side called the rear face, a polyethylene, ethylene-vinyl acetate copolymer, fluoride resin, polyester resin, or other polymer material, or a metal material.

The support member 3 may be rigid, or may be flexible; a metal plate, resin sheet, tile, wooden board, concrete, or similar can be used. The surface may be covered with a material other than the main material.

The surfaces of both the solar cell module 1 and the support member 3 can be treated with a surface treatment employing corona discharge, plasma or similar, or a primer may be applied thereto, in order to enhance the adhesive force of the sheet materials having adhesive properties 2a and 2b.

Pressure-sensitive type adhesive sheets can be used as the sheet-shape materials having adhesive properties 2a and 2b. Butyl rubber-based materials, foamy acrylic-based materials, solvent drying-type acrylic-based materials, foamy polyethylene-based materials, foamy polyurethane-based materials, and similar can be used; as sheet-shaped inexpensive materials, butyl rubber-based materials are desirable.

### Examples

Examples and comparative examples are presented to further explain the invention.
The temperature range required of a solar cell module stacked structure is -20°C to 85°C. Target values related to the adhesive strength set by the demand side based on the installation environment and the like are a peel strength of 1.2 N/cm², and a shear strength of 3.0 N/cm².

### (Example 1)

Fig. 1 to Fig. 3, which are a preferred mode, are explained as Example 1.
A flexible type solar cell module of thickness 0.85 mm was used. The material on the bonding face side was ethylene-ethylene tetrafluoride copolymer, the surface of which was plasma-treated. The support member was Galvalume steel sheet, to which a fluorine coating of thickness 2.0 mm was applied.
As the materials having adhesive properties, sheet-shape pressure-sensitive type foamy butyl rubber adhesive sheets of thickness 0.6 mm were used.

The butyl rubber adhesive sheet for low temperatures exhibited a storage elastic modulus at temperatures between - 20°C and 70°C of from 0.001 MPa to 1.0 MPa, and satisfied the requirements of a peel strength of 1.2 N/cm and a shear strength of 3.0 N/cm². The butyl rubber adhesive sheet for high temperatures exhibited a storage elastic modulus at temperatures between 0°C and 90°C of from 0.001 MPa to 1.0 MPa, and had a peel strength of 1.3 N/cm² to 8.0 N/cm² and a shear strength of 3.2 N/cm² to 20.0 N/cm², satisfying the target values of a peel strength of 1.2 N/cm² and shear strength of 3.0 N/cm².

The dimensions of the solar cell module 1 were 2000 mm in length and 500 mm in width. First, butyl rubber adhesive sheets were disposed as shown in Fig. 1 on the ethylene-ethylene tetrafluoride copolymer face which is the rear face of the solar cell module. It is desirable that the width of the adhesive sheets for low temperatures be from 20 mm to 50 mm.

The adhesive sheets were pressed onto the module rear face adequately using a spatula of a polypropylene or other material called a squeegee, and affixed such that air did not intrude. Then the release paper of the adhesive sheet was peeled away, and pressing onto the fluorine-coated Galvalume steel sheet which was the support member was performed using a 25 kg compaction roller, such that there were no portions which remained unaffixed due to the intrusion of air, and visually confirming that no portions were left unaffixed.
After leaving the module for three or more days at room temperature, the module was subjected to outdoor exposure tests at an installation angle of 30° (southern exposure). In this example curing was performed indoors, but curing may be performed outdoors without problem as well.

### (Example 2)

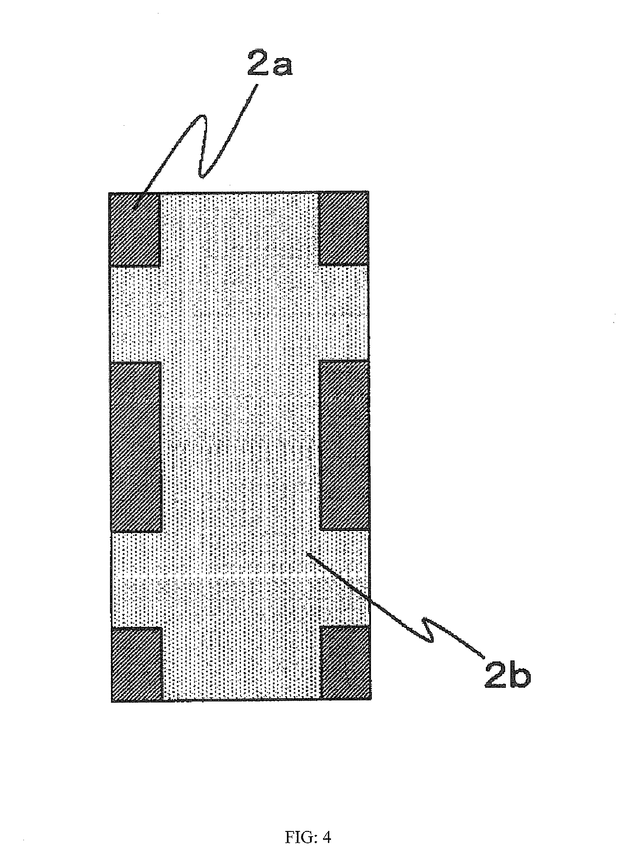

The same solar cell module 1 and support member 3 as in Example 1 were used.
The disposition of butyl rubber adhesive sheets on the rear face of the solar cell module 1 is shown in Fig. 4.
Affixing of adhesive sheets, curing, and outdoor exposure tests were the same as in Example 1.

### (Example 3)

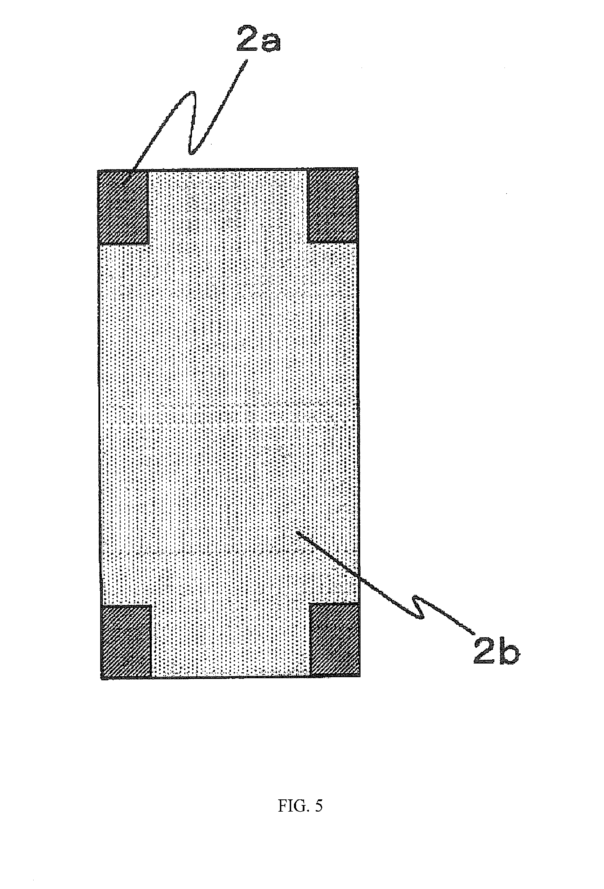

The same solar cell module 1 and support member 3 as in Example 1 were used.
The disposition of butyl rubber adhesive sheets on the rear face of the solar cell module 1 is shown in Fig. 5.
Affixing of adhesive sheets, curing, and outdoor exposure tests were the same as in Example 1.

### (Comparative Example 1)

As a comparative example, an example is described in which a single conventional adhesive sheet for low temperatures was used.
The same solar cell module 1 and support member 3 as in Example 1 were used.
The disposition of butyl rubber adhesive sheet on the rear face of the solar cell module 1 is shown in Fig. 6(a).
Affixing and curing of the adhesive sheet and outdoor exposure tests were the same as in Example 1.

### (Comparative Example 2)

As a comparative example, an example is described in which a single conventional adhesive sheet for high temperatures was used.
The same solar cell module and support member as in Example 1 were used.
The disposition of butyl rubber adhesive sheet on the rear face of the solar cell module is shown in Fig. 6(b).
Affixing and curing of the adhesive sheet and outdoor exposure tests were the same as in Example 1.

Table 1 summarizes results for the amounts of shifts in the positions of modules after one year of outdoor exposure tests, and visual observations of peeling of the corner portions of adhesive sheets, in Examples 1 to 3 and Comparative Examples 1 and 2.

**Table 1**

| | Example 1 | Example 2 | Example 3 | Comparative Example 1 | Comparative Example 2 |
|---|---|---|---|---|---|
| Outdoor exposure test | 1 year | 1 year | 1 year | 1 year | 1 year |
| Shift in position of solar cell module from initial period | No shift | No shift | 1 mm or less | 10 mm | none |
| Corner portion peeling (visual observation) | No peeling | No peeling | No peeling | No peeling | Peeled |

The results of the outdoor exposure tests indicated that in Examples 1 and 2, there were no shifts in position of the solar cell modules in the solar cell module structures, and there was no peeling of corner portions. There was no corner portion peeling in the solar cell module structure of Example 3. The position of the solar cell module was shifted from that of the initial period, but the shift in position was 1 mm or less. Because the allowed range of position shifts from the initial period of the solar cell module was 5 mm or less, the shift was within the range for which continued use was possible.

In Comparative Example 1, adhesive sheet for low temperatures was made to adhere over the entire face, and so there was no corner portion peeling, but the position of the solar cell module was moved by 10 mm from the position in the initial period, so that continued use was judged to be not possible. In Comparative Example 2, adhesive sheet for high temperatures was made to adhere over the entire face, and so there was no shift in position of the solar cell module from the initial period, but peeling at the corner portions of the solar cell module was observed, and continued use was not possible.

### EXPLANATION OF REFERENCE NUMERALS

1 Solar cell module
2 Sheet-shape material having adhesive function
2a Sheet shape material having adhesive function: adhesive sheet for low temperatures
2b Sheet shape material having adhesive function: adhesive sheet for high temperatures
3 Support member
4 Solar cell

## Claims

1. A solar cell module bonding structure, in which a solar cell module is bonded to a support member via an adhesive material, **characterized in that**
the adhesive material includes at least two adhesive materials, disposed in mutually different bonding regions and having mutually different temperature characteristics of an elastic modulus.

2. The solar cell module bonding structure according to Claim 1, **characterized in that** the at least two adhesive materials are pressure-sensitive type adhesive sheets.

3. The solar cell module bonding structure according to Claim 2, **characterized in that** one of the adhesive materials exhibits a storage elastic modulus of 0.001 MPa to 1.0 MPa in a temperature range of -20°C to 85°C.

4. The solar cell module bonding structure according to Claim 2 or Claim 3, **characterized in that**
one of the bonding regions includes a corner portion on a rear-face side of the solar cell module, and
the adhesive sheet disposed in the corner portion on the rear-face side exhibits a rubber elastic region at a relatively lower temperature than the adhesive sheet disposed in another bonding region.

5. The solar cell module bonding structure according to Claim 1, **characterized in that** the support member includes a metal plate, resin sheet, tile, wooden board, or concrete.

6. A method of installing a solar cell module, by which the solar cell module is bonded to a support member,
the method comprising:
preparing at least two adhesive materials having mutually different temperature characteristics of an elastic modulus; and
disposing the adhesive materials in different regions of the solar cell module for bonding thereof.

7. The method of installing a solar cell module according to Claim 6, **characterized in that** the adhesive materials are pressure-sensitive type adhesive sheets.

8. The method of installing a solar cell module according to Claim 7, **characterized in that** one of the adhesive materials exhibits a storage elastic modulus of 0.001 MPa to 1.0 MPa in a temperature range of -20°C to 85°C.

9. The method of installing a solar cell module according to Claim 7 or Claim 8, **characterized in that**
any of the bonding regions includes a corner portion on a rear-face side of the solar cell module, and
the adhesive sheet disposed in the corner portion on the rear-face side exhibits a rubber elastic region at a relatively lower temperature than the adhesive sheet disposed in another bonding region.

10. The method of installing a solar cell module according to Claim 6, wherein the support member includes a metal plate, resin sheet, tile, wooden board, or concrete.
